# FASCICULE DE BREVET EUROPEEN

(11) **EP 0 427 598 B1**
(45) Date de publication et mention de la délivrance du brevet: **17.03.1993**
(21) Numéro de dépôt: 90403097.0
(22) Date de dépôt: 02.11.1990
(51) Int. Cl.: F23J 13/02, F23J 13/04, F16L 59/12, E04F 17/02

(54) **Segment emboîtable pour conduit de fumée**
Steckbares Element für ein Abzugsrohr
Interlocking element for a flue

(30) Priorité: 06.11.1989 FR 8914516
(43) Date de publication de la demande: 15.05.1991
(73) Titulaire: Urion, Daniel, F-75018 Paris (FR)
(72) Inventeur: Urion, Daniel, F-75018 Paris (FR)

(56) Documents cités:
- US-A- 3 226 135
- US-A- 4 029 344

## Description

La présente invention concerne un segment de conduit de fumée de cheminée préfabriqué, apte à être assemblé par emboîtement à un autre segment de conduit de fumée ou élément de cheminée.

Elle se rapporte plus précisément à un segment comportant au moins deux parois, dont une interne et l'autre externe, lesdites parois interne et externe formant des cylindres sensiblement coaxiaux et comportant des moyens de positionnement de l'une par rapport à l'autre, lesdits moyens de positionnement comprenant des entretoises formant pontets entre les parois interne et externe.

De tels segments de cheminée sont connus, mais ces segments connus présentent des inconvénients.

Le brevet US-A-4.029.344 décrit un dispositif de liaison entre les différentes portions de cheminées métalliques à double parois, qui permet un positionnement constant de la paroi extérieure par rapport à la paroi intérieure, au moyen d'une pluralité d'organes structurels rigides et relativement étroits, fixés aux extrémités de la paroi extérieure et à une distance faible et constante des extrémités de la paroi intérieure.

Les conduits réalisés selon le brevet US-A 4.029.344 ont pour inconvénient que, lorsque deux segments sont montés bout-à-bout, leurs parois internes sont assemblées l'une à l'autre de façon rigide et bord-à-bord par un collier interne, tandis qu'un autre collier, en position radiale externe, est nécessaire pour assembler les parois externes des deux segments. Il faut donc deux colliers par liaison entre deux segments, de sorte que le montage d'un tel conduit de fumée est long, complexe et onéreux.

Les conduits de fumée à double parois réalisés avec les segments décrits dans le brevet FR-A-1.577.032 présentent l'inconvénient d'utiliser des coiffes ou des brides annulaires métalliques (organes structurels rigides), nécessaires à une tenue structurelle convenable, qui créent un chemin naturel de conduction de la chaleur de la paroi intérieure à la paroi extérieure. Cette chaleur transmise à la paroi extérieure provoque des points chauds sur la surface externe d'un conduit de fumée dressé.

Le brevet européen EP-A-85.455 décrit un conduit à double parois métalliques dans lequel une dilatation relative est possible. L'espace entre les deux parois intérieure et extérieure est rempli par un manchon de matière isolante fibreuse et élastique et au moins un élément de connexion allongé s'étendant sur toute la hauteur de chaque segment de conduit.

Ce mode de réalisation de segment de cheminée est désavantageux du fait qu'il comprend des fixations des éléments de connexion aux deux extrémités de chaque paroi externe et une fixation au centre de la face extérieure de chaque paroi intérieure, que la présence d'isolant est obligatoire pour maintenir une bonne concentricité des deux parois, et qu'il est pratiquement impossible de prévoir une paroi intermédiaire entre les deux parois, afin d'agencer le segment en segment à triple paroi.

Le document GB-A-1.181.975 décrit des cheminées métalliques à double parois, dont les parois interne et externe sont maintenues espacées l'une de l'autre par des pièces de retenues annulaires.

Un joint d'étanchéité annulaire est prévu entre la base du raccord femelle et l'extrémité du raccord mâle.

Cette conception limite les températures d'utilisation, car il existe un risque de destruction du joint d'étanchéité par la chaleur.

Le brevet FR-A-2.566.095 décrit un conduit métallique à double parois maintenues espacées l'une de l'autre et isolées par des bagues rigides isolantes thermiquement, qui ont pour fonction, non exclusivement, de diminuer les ponts thermiques. Sur un tel type de conduit, il peut se produire des accidents, comme la chute de la paroi externe à la suite de la destruction par la chaleur des bagues isolantes qui ne peuvent donc plus remplir une de leurs fonctions consistant à retenir les parois.

De plus, la présence d'un isolant thermique entre les deux parois est nécessaire pour tenir ces parois l'une par rapport à l'autre et pour conserver leur concentricité.

Des cheminées métalliques à double parois sont également décrites par le brevet EP-A-60.316.

Ces cheminées sont constituées de segments emboîtables bout-à-bout les uns dans les autres. Chaque raccord ou segment de cheminée comprend une pièce de retenue annulaire réalisée en un matériau de faible conductivité à la chaleur et hermétique aux gaz, comparable dans sa forme et sa fonction à la bague isolante décrite dans le brevet FR-A-2.566.095.

Dans c'es deux brevets, cette pièce a pour fonction de positionner la paroi intérieure par rapport à la paroi extérieure pour obtenir une bonne coaxialité.

Dans le brevet EP-60316, pour éviter la chute de la paroi externe, en cas de destruction par la chaleur de la pièce de retenue annulaire, cette dernière est combinée à une pluralité d'organes structuraux rigides et relativement étroits placés dans le raccord mâle, et reliant la paroi externe à la paroi interne.

Comme ces organes structuraux sont étroits et s'étendent sensiblement dans un plan perpendiculaire à l'axe du segment, une bonne concentricité des parois interne et externe n'est obtenue que si, en plus de la pièce de retenue annulaire en partie basse de chaque segment, l'espace entre ses deux parois est rempli d'un matériau d'isolation thermique.

En outre, dans une telle structure, il semble très difficile de mettre en place une paroi intermédiaire entre les parois interne et externe.

De plus, cette construction est complexe et en traîne des surcoûts de fabrication éventuels du fait que les organes structurels rigides sont agencés en collerette ; par exemple, dans des cas de changement de l'épaisseur de l'isolant, il est nécessaire de refaire la collerette réalisée à partir d'un outillage spécifique, donc onéreux.

La présente invention vise à remédier à ces inconvénients, et à apporter divers avantages consistant essentiellement à obtenir un centrage radial entre les parois même quand les différentes parois se dilatent sous l'effet de la chaleur, et un bon maintien de la paroi intérieure par rapport à la paroi extérieure.

Un autre but de l'invention est de proposer une rigidification de la liaison entre les segments de conduit.

A cet effet, le segment de conduit de fumée apte à être assemblé par emboîtement à un autre segment ou à un élément de cheminée, et du type comportant aux moins deux parois, dont une interne et l'autre externe, formant des cylindres sensiblement coaxiaux, et positionnées l'une par rapport à l'autre par des moyens de positionnement comprenant des entretoises formant pontets entre les parois interne et externe, se caractérise selon l'invention en ce que, dans la partie d'extrémité supérieure du segment, lesdits moyens de positionnement sont uniquement constitués par au moins trois pontets, dont chacun est constitué par une pièce métallique s'étendant sensiblement parallèlement à l'axe du segment, et dont les parties d'extrémités radiales interne et externe forment des volets respectivement interne et externe s'étendant sensiblement parallèlement aux parois respectivement interne et externe, le volet interne dudit pontet étant solidarisé à la partie supérieure de la face externe de ladite paroi interne par une faible surface de la partie supérieure dudit volet interne, dont la partie inférieure est contrecoudée radialement vers l'extérieur par rapport à sa partie supérieure de façon à former un intervalle entre la face externe de ladite paroi interne et ladite partie inférieure dudit volet interne du pontet, et le volet externe dudit pontet étant fixé par sa partie supérieure à la face interne de ladite paroi externe, à une certaine distance sous l'extrémité supérieure de la face interne de la paroi externe, la partie inférieure dudit volet externe du pontet formant jambe de force prenant appui contre la face interne de ladite paroi externe, en dessous de la zone d'emboîtement de la partie d'extrémité supérieure du segment.

De préférence, la distance entre l'extrémité supérieure de la paroi externe et la partie supérieure du volet externe du pontet est au moins égale à la moitié de la hauteur d'emboîtement de la zone d'emboîtement supérieure d'un segment dans la zone d'emboîtement inférieure d'un segment supérieur. Il en résulte que la majeure partie de chaque pontet s'étend en-dessous de la zone d'emboîtement supérieure du segment correspondant.

Dans une variante de réalisation avantageuse, pour supporter des températures très élevées, le segment selon l'invention comprend une paroi intermédiaire formant un cylindre sensiblement coaxial aux parois interne et externe.

Afin de perfectionner l'isolation thermique, il peut être prévu un matériau thermiquement isolant entre au moins deux parois.

Dans le but d'éviter que le matériau isolant thermiquement ne soit détruit par la chaleur et/ou de conserver la même épaisseur de matériau isolant si l'on change le diamètre du conduit de fumée, le segment comprend une paroi intermédiaire formant un cylindre sensiblement coaxial aux parois interne et externe et il est prévu un matériau thermiquement isolant entre la paroi externe et la paroi intermédiaire.

En variante et afin de bloquer la matière isolante thermiquement, la paroi intermédiaire présente au moins un moletage de raidissement en saillie vers l'extérieur ou l'intérieur.

En vue de positionner deux parois séparées au moins par une paroi intermédiaire, la paroi intermédiaire présente des ouvertures de passage des pontets.

Dans le but de solidariser la paroi intermédiaire avec le reste du segment, au moins un pontet présente au moins un crevé formant une languette de fixation contre la paroi intermédiaire, et apte à être soudée à cette dernière.

En vue de positionner la paroi intermédiaire, l'un au moins des bords inférieur et supérieur d'au moins un pontet forme un vé dont le fond positionne radialement la paroi intermédiaire.

Afin d'améliorer l'isolation thermique d'un segment à triple paroi, il est également possible que l'une au moins des parties d'extrémités supérieure et inférieure de la paroi intermédiaire de chaque segment présente au moins un moletage périphérique en saillie radiale, délimitant une gorge annulaire logeant un joint d'étanchéité compressible, réalisé en un matériau thermiquement isolant, par exemple en fibres réfractaires, et destiné à être comprimé par une partie d'extrémité inférieure ou supérieure de la paroi intermédiaire d'un autre segment, à l'emboîtement des segments et donc desdites parois intermédiaires, afin que les parois intermédiaires forment une cloison sensiblement étanche, délimitant deux canaux annulaires susceptibles d'être parcourus, l'un, délimité entre la paroi intermédiaire et la paroi externe, par un gaz froid descendant à faible coéfficient de conductivité thermique, tel que de l'air, et l'autre, délimité entre la paroi intermédiaire et la paroi interne, par un gaz chaud montant, la circulation du gaz pouvant être assurée naturellement, par exemple par thermosiphon, ou encore par ventilation forcée.

Dans ce cas, il n'est pas souhaitable que la paroi intermédiaire de chaque segment soit percée d'ouvertures de passage pour les pontets, mais au contraire qu'elle soit continue, chaque pontet étant subdivisé en deux parties de pontet séparées l'une de l'autre, dont l'une est une partie de pontet interne, fixée à la paroi interne par le volet interne du pontet, et à la face interne de la paroi intermédiaire par une patte externe repliée, de préférence du côté opposé au volet interne, et dont l'autre est une partie de pontet externe fixée à la paroi externe par le volet externe du pontet et à la face externe de la paroi intermédiaire par une patte interne repliée, de préférence du côté opposé au volet externe, lui-même replié de préférence du côté opposé au volet interne.

Bien entendu, il est également possible que les parois intermédiaires des segments, dont chacune est continue et reliée aux parois interne et externe correspondantes par des parties de pontet respectivement interne et externe, forment une cloison intermédiaire relativement étanche sans la présence de joint d'étanchéité compressible et thermiquement isolant entre des parties emboîtées des parois intermédiaires.

Dans le but d'éviter un déboîtement accidentel des segments les uns par rapport aux autres et/ou d'obtenir un bon positionnement d'un faible coût entre les segments, chacun desdits segments présente, dans la partie inférieure de sa paroi externe et au-dessus de sa zone d'emboîtement inférieure, un moletage périphérique inférieur en saillie vers l'intérieur, formant, d'une part, une butée limitant l'emboîtement d'un autre segment analogue ou d'un élément de cheminée dans la zone d'emboîtement inférieure dudit segment, et, d'autre part, une gorge ouverte radialement vers l'extérieur, apte à positionner un collier de fixation de deux segments emboîtés.

Afin de maintenir la liaison entre deux segments, au moyen d'un collier de fixation, et que les pontets s'appuient dans une zone de la paroi externe qui est inférieure à ladite liaison, chaque segment présente également, dans la partie supérieure de sa paroi externe et au-dessous de sa zone d'emboîtement supérieure, un premier moletage périphérique supérieur en saillie vers l'intérieur, formant une gorge ouverte radialement vers l'extérieur et apte à positionner un collier de fixation de deux segments emboîtés, et chaque pontet présente une échancrure traversant son volet externe de sorte qu'il chevauche avec jeu ledit moletage supérieur et que l'échancrure sépare la partie supérieure de la partie inférieure du volet externe.

Afin de renforcer l'étanchéité au niveau de l'emboîtement de deux segments maintenus emboîtés par un collier de fixation, il est en outre avantageux qu'un joint d'étanchéité annulaire compressible, réalisé également en un matériau thermiquement isolant, par exemple en fibres réfractaires, soit disposé à l'intérieur du collier de fixation, afin d'être comprimé, par le serrage de ce collier de fixation, contre la face externe de parties emboîtées des parois externes des deux segments emboîtés considérés.

Afin de raidir la partie supérieure de la paroi externe tout en permettant un positionnement convenable de la partie supérieure du volet externe de chaque pontet à la distance voulue en dessous de l'extrémité supérieure de la paroi externe du segment, ce dernier peut avantageusement présenter, au-dessus du premier moletage périphérique supérieur, un second moletage périphérique supérieur, également pratiqué en saillie vers l'intérieur dans la partie supérieure de la paroi externe, afin de la rigidifier, le bord inférieur de ce moletage formant une butée haute, contre laquelle est appliquée la partie supérieure du volet externe du pontet.

Simultanément, ce second moletage périphérique supérieur forme une gorge ouverte radialement vers l'extérieur, et destinée à loger un joint d'étanchéité annulaire, compressible et en un matériau thermiquement isolant, qui est comprimé dans sa gorge par l'emboîtement de la partie inférieure de la paroi externe d'un segment supérieur autour de la partie supérieure de la paroi externe du segment considéré. On améliore encore ainsi l'étanchéité au niveau de l'emboîtement de deux segments.

Cet emboîtement est réalisé dans de meilleures conditions si, de plus, la partie supérieure de la paroi externe est, au-dessus du second moletage périphérique supérieur, d'un diamètre réduit ou resserré par rapport à celui de cette même partie supérieure en dessous de ce second moletage supérieur, alors que la partie inférieure de la paroi externe est évasée vers l'extérieur par un contre-coudage formant un épaulement pouvant prendre appui contre la face externe du bord inférieur du second moletage supérieur d'un autre segment emboîté dans la zone d'emboîtement inférieure du segment considéré, de sorte que le second moletage supérieur de' chaque segment forme simultanément de plus une butée secondaire ou accessoire, pouvant limiter l'emboîtement des segments.

Dans le but de lier de manière avantageusement simple la paroi externe à l'ensemble du segment, la partie supérieure du volet externe d'au moins un pontet est fixée par au moins une soudure par point à la paroi externe.

De même, en vue de solidariser de manière avantageusement simple la paroi interne à l'ensemble du segment, au moins un pontet est solidarisé par son volet interne à la paroi interne au moyen d'un seul point d'ancrage.

Dans une première variante, et afin d'éviter l'oxydation de la paroi interne qui apparaîtrait le long d'un soudage et de maintenir une bonne élasticité à la liaison avec la paroi interne, au moins un pontet est solidarisé à la paroi interne par sertissage du bord supérieur de la paroi interne sur la partie supérieure du volet interne qui est roulée vers l'extérieur.

Dans une deuxième variante, afin de solidariser les pontets de manière précise et rapide, au moins un pontet est solidarisé à la paroi interne au moyen d'un repli à angle sensiblement droit vers l'extérieur de la partie supérieure de son volet interne en butée contre un repli analogue du bord supérieur de la paroi interne et par une soudure par point.

De préférence, afin de diminuer l'énergie thermique conduite par les pontets, ces derniers sont perforés.

En vue de limiter le nombre de perforations pour la même diminution de l'énergie thermique conduite par les pontets, les perforations dans les pontets sont allongées suivant l'axe du segment.

Dans le but que les forces transmises par les pontets passent par l'axe du conduit de fumée, au moins un pontet s'étend radialement au segment.

Afin que les pontets puissent chacun faire jambe de force, la dimension axiale du volet externe est supérieure à la dimension axiale du volet interne.

D'autres caractéristiques et avantages de l'invention apparaîtront clairement à la lecture de la description qui va suivre, donnée à titre non limitatif, en se référant aux dessins annexés, dans lesquels :

La Figure 1 représente un exemple de segment à double parois, en demi-coupe axiale et en demi-vue en élévation.

La Figure 2 représente en coupe partielle l'emboîtement de deux segments selon la Figure 1.

La Figure 3 représente en demi-coupe un exemple de segment comprenant trois parois.

La Figure 3A représente, en variante d'un détail de la Figure 3, un mode de fixation d'un pontet à la paroi interne.

La Figure 4 représente en coupe partielle de la paroi interne à la paroi et externe, l'emboîtement de segments à trois parois selon la Figure 3.

La Figure 5 représente en coupe une partie de pontet perforé lié à la paroi interne d'un segment.

La Figure 6 représente schématiquement et partiellement, en coupe par un plan perpendiculaire à l'axe du segment, une variante de segment à triple paroi, dont la paroi intermédiaire n'est pas traversée par les pontets, qui sont chacun subdivisés en deux parties distinctes, dont l'une est une partie de pontet interne reliant la paroi interne à la paroi intermédiaire, et l'autre est une partie de pontet externe, reliant la paroi intermédiaire à la paroi externe.

La Figure 7 représente schématiquement et partiellement, en coupe par un plan parallèle à l'axe du segment, l'emboîtement étanche des parois intermédiaires de deux segments selon la Figure 6, emboîtés l'un dans l'autre.

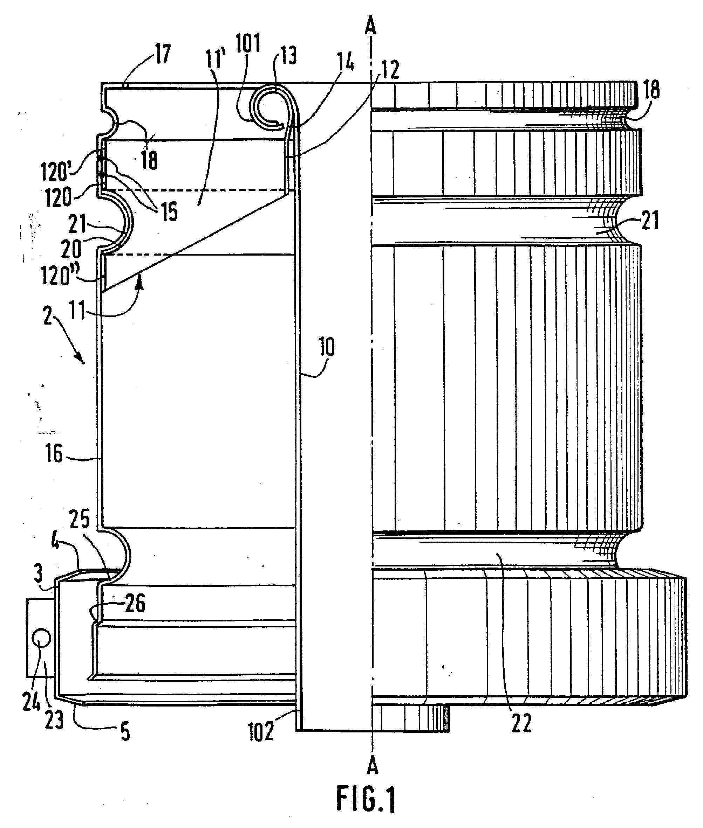

Les segments 2 illustrés sur les figures annexées sont destinés à la réalisation de conduits de fumée pour foyers ouverts ou fermés, par assemblage par emboîtement bout à bout des segments, tels que celui décrit ci-dessous en référence à la Figure 1, la liaison entre deux segments 2 emboîtés étant maintenue par un collier de fixation 3.

La Figure 1 représente une variante de segment 2 selon l'invention. Chaque segment 2 est essentiellement constitué d'une paroi interne 10 et d'une paroi externe 16, qui sont en tôles métalliques sensiblement conformées en troncs de cylindres de section circulaire et agrafées ou soudées le long d'une génératrice, ainsi que de pontets métalliques 11 reliant les deux parois 10 et 16 l'une à l'autre de façon à les maintenir sensiblement concentriques autour de l'axe A-A du segment. Chacun des pontets 11, qui sont régulièrement répartis en direction circonférentielle autour de l'axe A, est réalisé par découpage et pliage d'une pièce de tôle de façon à présenter essentiellement un voile central 11′, s'étendant sensiblement radialement dans un plan passant par l'axe A-A, et, à chacune des extrémités radiales interne et externe du voile 11′, respectivement un volet interne 12 et un volet externe 120, qui sont chacun sensiblement perpendiculaire au voile central 11′ et ainsi sensiblement parallèle à la paroi interne 10 ou externe 16 correspondante, et obtenu par pliage d'une partie d'extrémité radiale respectivement interne et externe du pontet 11. Sur cette figure, la demi-coupe représente la paroi interne 10, dont la partie supérieure 101 est roulée vers l'extérieur, pour être solidarisée par sertissage à la partie supérieure 13 du volet interne 12 du pontet 11, qui est roulée vers l'extérieur. Le volet interne 12 présente un contre-coudage 14 entre sa partie supérieure 13 et sa partie inférieure, qui forme un jeu radial avec la paroi interne 10. La partie supérieure 120′ du volet externe 120 du pontet est fixée contre la face interne de la paroi externe 16 par des soudages par point 15. L'extrémité supérieure 17 de la paroi externe 16 est repliée à angle droit vers l'intérieur, et, à une certaine distance sous ce repli 17, la partie supérieure de cette paroi externe 16 présente un petit jonc 18, en saillie vers l'intérieur, réalisé sous la forme d'un moletage périphérique qui définit une gorge annulaire ouverte radialement vers l'extérieur. Entre le bord supérieur de ce moletage 18 et le repli 17, le rayon de la partie supérieure de la paroi externe 16 est inférieur sensiblement de la valeur de l'épaisseur de cette paroi 16, au rayon de cette même partie supérieure de la paroi externe 16 en dessous du moletage 18. Chaque pontet 11 est positionné entre les parois 10 et 16 de sorte que la partie supérieure 120′ de son volet externe 120 et le bord supérieur du pontet 11 sont en appui contre le moletage 18, formant ainsi une butée haute pour le pontet 11, afin d'espacer ce dernier du repli 17 d'une distance au moins égale, et de préférence supérieure, à la moitié de la hauteur de la zone d'emboîtement supérieure du segment. Cependant, la partie supérieure de la paroi externe 16 au dessus du pontet 11 est convenablement rigidifiée par la présence du jonc ou moletage interne 18. La partie inférieure 120˝ du volet externe 120 s'appuie en jambe de force sur la face intérieure de la paroi externe 16 sans autre moyen de fixation que le frottement provoqué par la force de pression communiquée au pontet 11 par la paroi interne 10, surtout quand elle se dilate. Les parties supérieure 120′ et inférieure 120˝ du volet externe 120 du pontet 11 sont séparées l'une de l'autre par une échancrure 20, représentée en arc de cercle mais pouvant être rectangulaire, qui laisse un jeu entre le pontet 11 et la saillie d'un autre moletage 21 périphérique supérieur vers l'intérieur. Dans la partie supérieure de la paroi externe 16, ce moletage 21 est pratiqué en dessous de la zone d'emboîtement supérieure du segment et à une certaine distance sous le moletage 18, en étant plus important que ce dernier. La zone d'emboîtement inférieure du segment 2 est délimitée en dessous d'un moletage périphérique inférieur 22, également en saillie vers l'intérieur, dans la partie inférieure de la paroi externe 16. Dans cette zone d'emboîtement inférieure, la partie inférieure de la paroi externe 16 est évasée et contre-coudée en gradins vers l'extérieur, de façon à former un épaulement 26, tandis que la partie inférieure 102 de la paroi interne 10 est droite et s'étend axialement en saillie en dessous de la paroi externe 16. Cette zone d'emboîtement inférieure évasée par contre-coudage à la partie inférieure de la paroi externe 16 est destinée à recevoir, à l'emboîtement, la zone d'emboîtement supérieure de la partie supérieure de la paroi externe 16 d'un segment 2 identique inférieur. Le moletage périphérique inférieur 22 forme une gorge ouverte radialement vers l'extérieur, apte à recevoir la partie supérieure 4 d'un collier 3, dont la partie inférieure 5 peut être positionnée dans la gorge ouverte radialement vers l'extérieur et réalisée par le moletage supérieur 21 d'un segment 2 inférieur emboîté dans le premier segment 2. La partie inférieure du moletage inférieur 22 forme une butée 25 en saillie sur la face intérieure de la paroi externe 16, et contre laquelle vient s'arrêter le repli 17 lors de l'emboîtement d'un segment 2 inférieur. Cette butée constitue la limite supérieure de l'emboîtement. Le collier 3 est muni d'une plaque radiale 23 comprenant un perçage de fixation 24. La demi-vue représente la face extérieure de la paroi externe 16 avec les gorges périphériques supérieures 18, 21 et inférieure 22, et cette demi-vue représente également la face extérieure du collier de fixation 3.

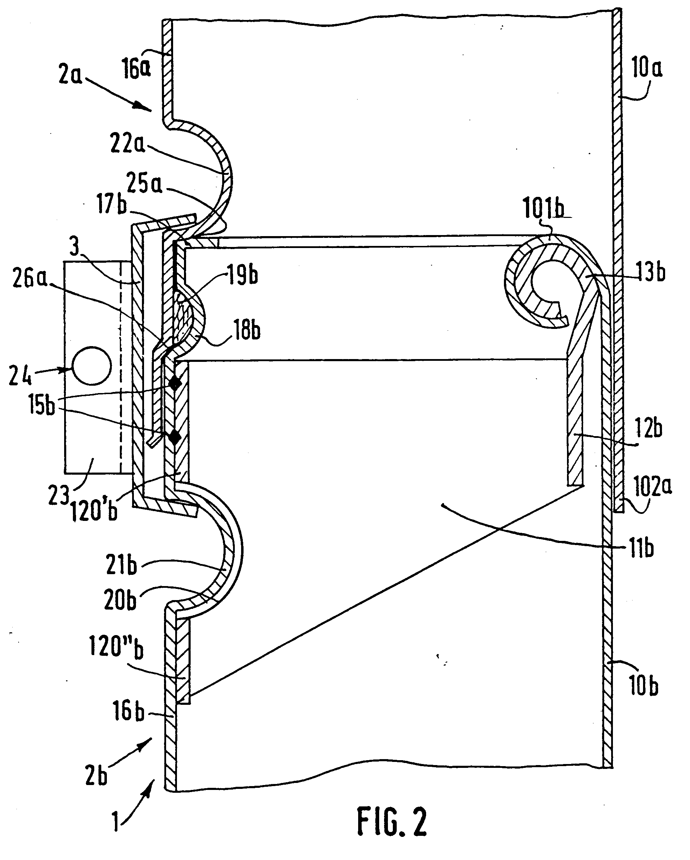

Sur la Figure 2, on a représenté l'emboîtement de deux segments identiques à celui de la Figure 2, les éléments du segment supérieur et les éléments du segment inférieur étant repérés par les mêmes références numériques que celles désignant les éléments correspondants du segment de la Figure 2, mais affectées respectivement de l'indice a pour le segment supérieur et de l'indice b pour le segment inférieur.

Dans l'emboîtement de la partie inférieure du segment supérieur 2a sur la partie supérieure du segment inférieur 2b, tel que représenté à la Figure 2, la face intérieure de la partie supérieure 101b de la paroi interne 10b du segment inférieur 2b est positionnée contre la face extérieure de la partie inférieure 102a de la paroi interne 10a du segment supérieur 2a, la partie roulée du bord supérieur 101b de la paroi 10b ayant servi de chanfrein de guidage pour la paroi 10a.

La face extérieure de la partie supérieure de la paroi externe 16b du segment inférieur 2b vient s'emboîter contre la face intérieure de la partie inférieure de la paroi externe 16a du segment supérieur 2a.

Comme représenté sur la Figure 2, on peut constater que le repli 17b de l'extrémité supérieure de la paroi externe 16b est en butée contre la saillie 25a formée par le moletage inférieur 22a du segment supérieur et constituant la limite supérieure de l'emboîtement.

Simultanément, l'épaulement 26a de la partie inférieure contre-coudée de la paroi externe 16a est immédiatement en vis-à-vis de et presque en appui contre la face externe du bord inférieur du petit moletage supérieur 18b, qui constitue ainsi une butée secondaire limitant l'emboîtement des segments 2a et 2b, la portion resserrée de la paroi externe 16b, entre le petit moletage 18b et le bord supérieur replié 17b, étant appliquée contre l'intérieur de la portion de paroi externe 16a entre la butée 25a du moletage inférieur 22a et l'épaulement 26a du contre-coudage, tandis que la portion de paroi externe 16b entre les deux moletages supérieurs 18b et 21b est appliquée contre l'intérieur de la portion de paroi externe 16a sous l'épaulement 26a du contre-coudage. Pour assurer une bonne étanchéité à l'emboîtement, un joint d'étanchéité annulaire et compressible 19b, réalisé en un matériau thermiquement isolant, tel que des fibres réfractaires, est logé dans la gorge du moletage 18b, et ce joint 19b est comprimé par l'emboîtement dans la paroi externe 16a.

L'emboîtement est maintenu serré par le collier de fixation 3, dont la partie supérieure 4 se loge dans la gorge externe périphérique formée par le moletage 22a inférieur dans la paroi externe 16a du segment supérieur 2a, et dont la partie inférieure 5 se loge dans la gorge externe périphérique formée par le moletage supérieur 21b dans la paroi externe 16b du segment inférieur 2b.

La partie inférieure 120˝b du volet externe 120b du pontet 11b est située sous l'emboîtement, cette partie du pontet 11b étant une partie qui travaille en formant jambe de force pour s'opposer à la dilatation de la paroi interne 10b. De même, une portion importante de la partie supérieure de ce même pontet 11b est située sous l'emboîtement.

Le contre-coudage élargissant le diamètre inférieur de la paroi externe 16a du segment supérieur 2a sert de chanfrein de guidage lors de l'emboîtement de la paroi externe 16b du segment inférieur 2b.

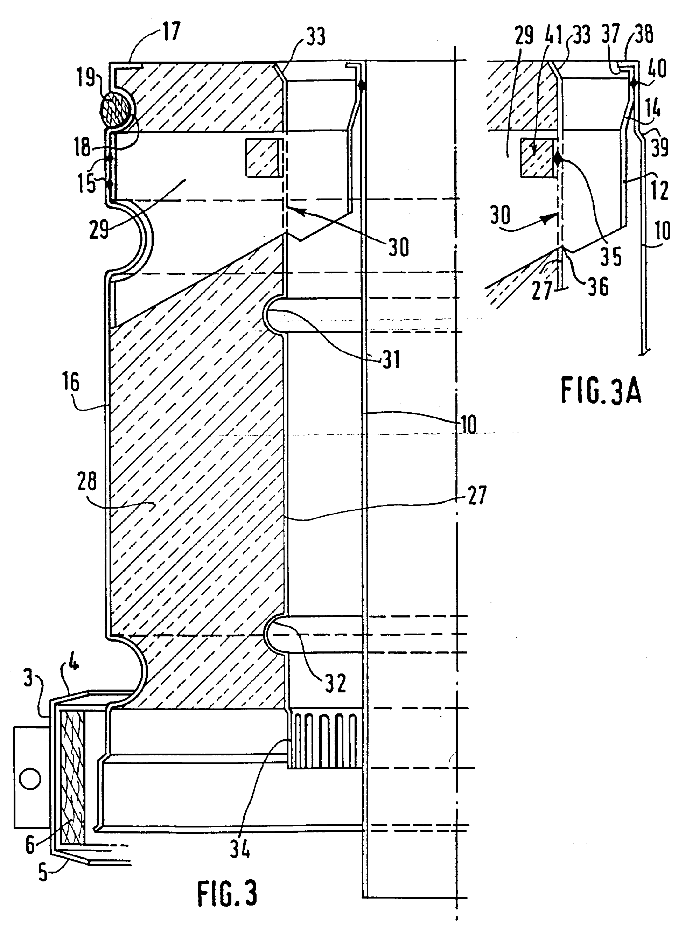

La Figure 3 représente en demi-coupe une variante de segment 2 selon l'invention, qui diffère du segment représenté à la Figure 1 en ce qu'il comprend une paroi intermédiaire 27 formant un cylindre sensiblement coaxial aux parois interne 10 et externe 16, un matériau thermiquement isolant 28 entre la paroi externe 16 et la paroi intermédiaire 27, et un type de pontet 29 différent de celui représenté à la Figure 2, les différences de ce pontet étant expliquées en référence à la vue de détail de la Figure 3A.

La paroi intermédiaire 27 forme un tube d'un diamètre supérieur à celui de la paroi interne 10 et inférieur à celui de la paroi externe 16. Elle comprend une ouverture 30 de passage pour chaque pontet, deux moletages périphériques de raidissement, respectivement supérieur 31 et inférieur 32, en saillie circonférentielle vers l'extérieur, qui permettent le maintien du matériau isolant thermiquement 28 et qui raidissent la paroi intermédiaire 27, un repli vers l'extérieur à la partie supérieure extrême, qui forme un chanfrein 33 facilitant son emboîtement autour de la paroi intermédiaire d'un segment supérieur analogue, une partie inférieure extrême 34 apte à l'emboîtement dans le chanfrein de la paroi intermédiaire d'un segment inférieur, cette partie inférieure 34 ayant été rendue par rainurage apte à l'emboîtement par un rétrécissement de son diamètre par rapport au diamètre de la paroi intermédiaire 27.

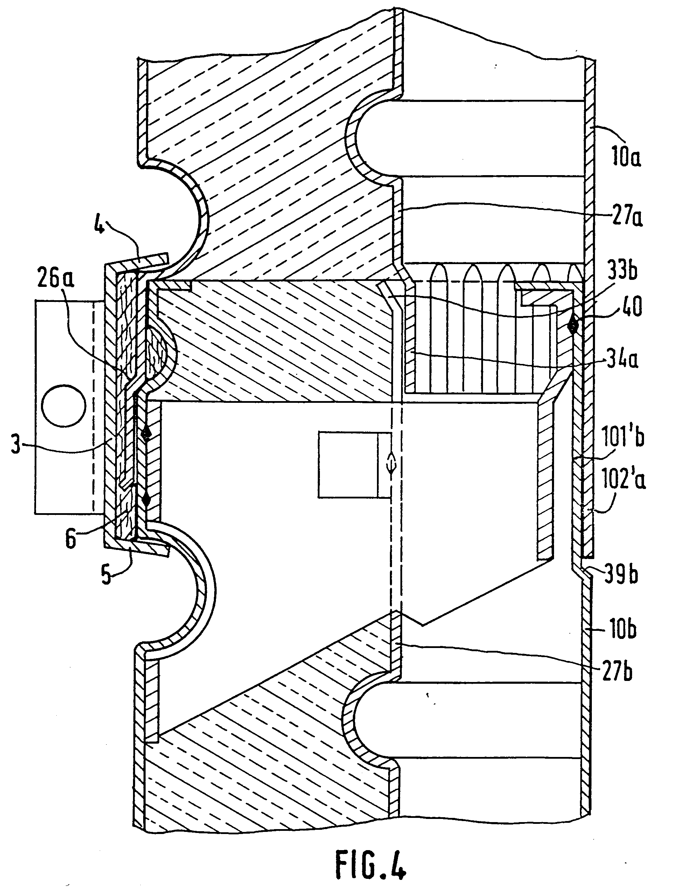

Pour améliorer l'étanchéité à l'emboîtement, un joint d'étanchéité 6, annulaire et compressible, réalisé en un matériau thermiquement isolant (fibres réfractaires) peut être logé à l'intérieur du collier de fixation 3, entre ses jupes supérieure 4 et inférieure 5, et ce joint 6 est comprimé autour des parties emboîtées des parois externes de deux segments emboîtés, par le serrage du collier de fixation 3, comme représenté sur la Figure 4.

La Figure 3A représente la moitié intérieure d'une variante de pontet 29 et sa fixation à la paroi interne 10 et à la paroi intermédiaire 27. Le pontet 29 présente un crevé 41, replié sensiblement perpendiculairement par rapport au voile central du pontet 29, formant une languette de fixation contre la paroi intermédiaire 27 et qui est soudée par un point 35 à cette dernière. Un vé inversé 36 découpé dans le bord inférieur du pontet 29 permet de positionner radialement la paroi intermédiaire 27. La partie supérieure du volet interne 12 de ce pontet, plus près de l'axe du segment 2 que la partie inférieure dudit volet 12, est soudée par un point 40 à la paroi interne 10. Le positionnement du volet 12 avant soudage se fait par le contact du repli 37 vers l'extérieur à angle sensiblement droit à l'extrémité supérieure du volet 12 contre le repli analogue 38 de l'extrémité supérieure de la paroi interne 10. De façon à augmenter le jeu entre la partie inférieure du volet 12 et la paroi interne 10, cette dernière comporte un contre-coudage 39 orienté de manière à éloigner la face extérieure de la paroi interne 10 de la partie inférieure du volet 12. La partie supérieure du volet 12 est plus courte que sa partie inférieure, les deux parties du volet 12 respectivement supérieure et inférieure étant séparées par un contre-coudage 14 analogue à celui représenté à la Figure 1.

Sur la Figure 4, on a représenté l'emboîtement de deux segments identiques à celui de la Figure 3, les éléments du segment supérieur et les éléments du segment inférieur étant repérés par les mêmes références numériques que celles désignant les éléments correspondant du segment de la Figure 3 mais affectées respectivement de l'indice a pour le segment supérieur et de l'indice b pour le segment inférieur.

Cet emboîtement diffère de celui représenté à la Figure 2 en ce que la partie supérieure 101′b de la paroi interne 10b est d'un diamètre sensiblement supérieur à celui du reste de ladite paroi interne 10b, et parallèle à la partie inférieure 102′a de la paroi interne 10a, de manière à ce que la face intérieure de la partie supérieure 101′b de la paroi interne 10b vienne en contact avec la face extérieure de la partie inférieure 102′a de la paroi interne 10a. Cette différence de diamètre est obtenue par le contre-coudage 39b.

L'emboîtement diffère également de celui de la Figure 2 en ce que la face intérieure de la partie supérieure de la paroi intermédiaire 27b vient en contact avec la face extérieure de la partie inférieure extrême 34a de la paroi intermédiaire 27a.

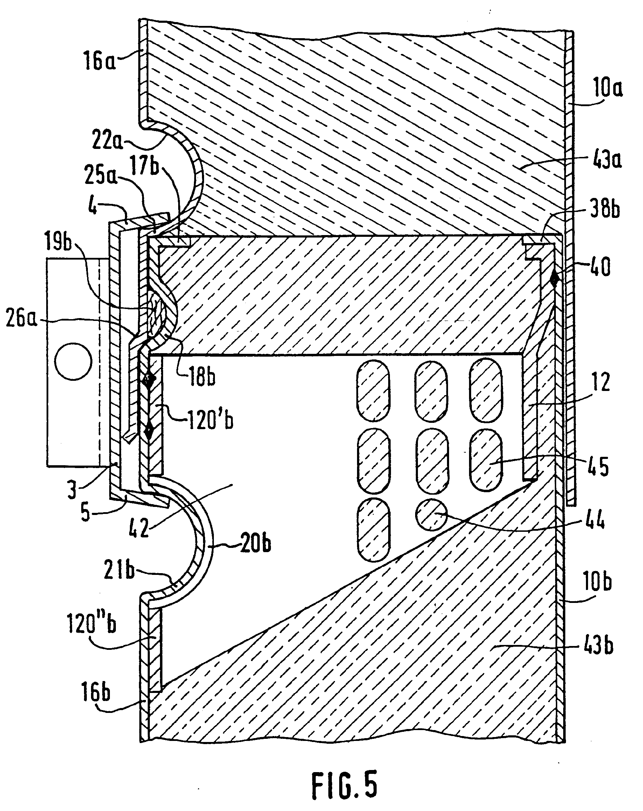

La Figure 5 représente en coupe une variante selon l'invention de la fixation d'un pontet à la paroi interne 10b et l'emboîtement entre deux paroi internes 10a, 10b, respectivement d'un segment supérieur et d'un segment inférieur. Cette figure diffère de la Figure 3A en ce qu'il est représenté l'emboîtement entre deux parois internes 10a, 10b, qui sont sans contre-coudage et légèrement tronconiques pour s'emboîter l'une 10a dans l'autre 10b, que chaque segment respectivement supérieur et inférieur contient un matériau thermiquement isolant 43a, 43b, entre ses deux parois, que la paroi interne 10b est rectiligne dans sa partie supérieure jusqu'au repli de son extrémité supérieure à angle sensiblement droit 38b, servant de butée à l'extrémité supérieure du volet 12 du pontet 42, également repliée à angle droit vers l'extérieur, et que le pontet 42 comporte une perforation circulaire 44, dans le présent exemple de réalisation, et des perforations allongées 45 suivant l'axe du segment.

Dans les exemples de réalisation de l'invention représentés précédemment, la dimension axiale du volet externe du pontet est supérieure à la dimension axiale du volet interne dudit pontet, ce qui implique que son voile central se présente sous la forme d'un trapèze. A la Figure 3, un vé est découpé dans le bord inférieur du pontet, en variante de réalisation, un vé peut être découpé dans le bord supérieur du pontet plutôt que dans ledit bord inférieur.

En variante de segments à triple paroi, la paroi intermédiaire de chaque segment peut être continue, sans présenter d'ouverture de passage des pontets, et peut s'emboîter de manière étanche avec les parois intermédiaires d'autres segments, de façon à former avec ces parois intermédiaires une cloison sensiblement étanche entre deux canaux annulaires externe et interne, délimités le premier entre les parois intermédiaires et les parois extérieures emboîtées, et le second entre les parois intermédiaires et les parois internes emboîtées. Dans ce cas, un gaz faiblement conducteur de la chaleur, tel que l'air, peut circuler dans les canaux ne contenant pas de matériau d'isolation thermique, un courant descendant de gaz froid parcourant le canal externe, tandis qu'un courant ascendant de gaz réchauffé au contact des parois internes parcourt le canal interne. Une telle circulation de gaz peut s'effectuer naturellement, par effet de thermosiphon, ou être provoquée par ventilation forcée.

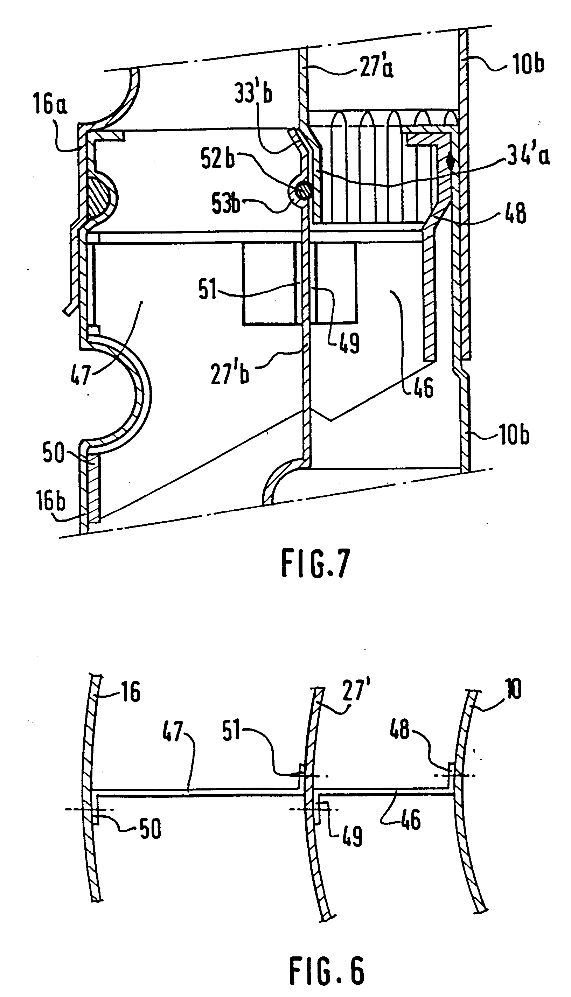

Dans un exemple de segment à triple paroi tel que représenté partiellement sur la Figure 6, et permettant de réaliser un conduit de fumée de ce type, chaque pontet est constitué de deux parties de pontet séparées l'une de l'autre, dont l'une est une partie de pontet interne 46, reliant la paroi interne 10 à la paroi intermédiaire 27′, et dont l'autre est une partie de pontet externe 47, reliant la paroi intermédiaire 27′ à la paroi externe 16. La partie de pontet interne 46 présente le volet interne 48 du pontet, replié sensiblement à angle droit d'un côté et fixé par un point de soudure contre la face externe de la paroi interne 10, et son extrémité radiale externe est repliée sensiblement à angle droit de l'autre côté, en patte externe 49 fixée par des points de soudure contre la face interne de la paroi intermédiaire 27′. La partie de pontet externe 47 présente le volet externe 50 du pontet, replié du côté opposé au volet interne 48, et fixé par des points de soudure contre la face interne de la paroi externe 16, tandis que son extrémité radiale interne est repliée de l'autre côté en patte interne 51, fixée par des points de soudure contre la face externe de la paroi intermédiaire 27′. Ainsi, les deux parties de pontet 46 et 47 ont chacune une section sensiblement en forme de Z, bien visible sur la Figure 6. De plus, comme représenté sur la Figure 7, la paroi intermédiaire 27′b d'un segment inférieur présente, dans sa partie supérieure, juste sous son extrémité supérieure repliée vers l'extérieur en chanfrein 33′b, un moletage périphérique 53b en saillie vers l'extérieur, délimitant une gorge ouverte radialement vers l'intérieur et logeant un joint d'étanchéité annulaire compressible 52b, en matériau thermiquement isolant. Ce joint 52b est comprimé par l'extrémité inférieure 34′a, contre-coudée vers l'intérieur, de la paroi intermédiaire 27′a d'un segment supérieur, qui s'emboîte à l'intérieur de la paroi intermédiaire 27′b. Une bonne étanchéité est ainsi assurée entre les parois intermédiaires par le simple emboîtement des segments constituant le conduit de fumée.

## Revendications

1. Segment (2) de conduit de fumée (1) préfabriqué, apte à être assemblé par emboîtement à un autre segment de conduit de fumée ou élément de cheminée et du type comportant au moins deux parois, dont une interne (10) et l'autre externe (16), formant des cylindres sensiblement coaxiaux, positionnées l'une par rapport à l'autre, par des moyens de positionnement comprenant des entretoises formant pontets (11, 29, 42) entre les parois interne et externe, caractérisé en ce que, dans la partie d'extrémité supérieure du segment (2) lesdits moyens de positionnement sont uniquement constitués par au moins trois pontets (11, 29, 42), dont chacun est constitué par une pièce métallique s'étendant sensiblement parallèlement à l'axe du segment (2), et dont les parties d'extrémités radiales interne et externe forment des volets respectivement interne (12) et externe (120) s'étendant sensiblement parallèlement aux parois respectivement interne (10) et externe (16), le volet interne (12) dudit pontet (11, 29, 42) étant solidarisé à la partie supérieure de la face externe de ladite paroi interne (10) par une faible surface de la partie supérieure dudit volet interne (12), dont la partie inférieure est contrecoudée radialement vers l'extérieur par rapport à sa partie supérieure de façon à former un intervalle entre la face externe de ladite paroi interne (10) et ladite partie inférieure dudit volet interne (12) du pontet (11, 29, 42), et le volet externe dudit pontet étant fixé par sa partie supérieure (120′) à la face interne de ladite paroi externe (16), à une certaine distance sous l'extrémité supérieure (17) de ladite face interne de ladite paroi externe (16), la partie inférieure (120˝) dudit volet externe du pontet (11, 29, 42) formant jambe de force prenant appui contre la face interne de ladite paroi externe (16), en dessous de la zone d'emboîtement de la partie d'extrémité supérieure du segment (2).

2. Segment selon la revendication 1, caractérisé en ce qu'il comprend une paroi intermédiaire (27) formant un cylindre sensiblement coaxial aux parois interne (10) et externe (16).

3. Segment selon l'une des revendications 1 et 2, caractérisé en ce qu'il est prévu un matériau thermiquement isolant (28, 43) entre au moins deux parois.

4. Segment selon la revendication 3 telle que rattachée à la revendication 2, caractérisé en ce qu'il est prévu un matériau thermiquement isolant (28) entre la paroi externe (16) et la paroi intermédiaire (27).

5. Segment selon l'une quelconque des revendications 2 à 4, caractérisé en ce que la paroi intermédiaire (27) présente au moins un moletage de raidissement (31, 32) en saillie vers l'extérieur ou l'intérieur.

6. Segment selon l'une des revendications 2 à 5, caractérisé en ce que la paroi intermédiaire (27) présente des ouvertures (30) de passage des pontets (11, 29, 42).

7. Segment selon la revendication 6, caractérisé en ce qu'au moins un pontet (29) présente au moins un crevé (41) formant une languette de fixation contre la paroi intermédiaire (27), et apte à être soudée à cette dernière.

8. Segment selon l'une des revendications 2 à 7, caractérisé en ce que l'un au moins des bords inférieur et supérieur d'au moins un pontet (29) forme un V (36) dont le fond positionne radialement la paroi intermédiaire (27).

9. Segment selon la revendication 2, caractérisé en ce que l'une au moins des parties d'extrémités supérieure et inférieure de la paroi intermédiaire (27′b) présente au moins un moletage périphérique (53b) en saillie radiale délimitant une gorge annulaire logeant un joint d'étanchéité (52b) compressible et thermiquement isolant, destiné à être comprimé par une partie d'extrémités (34′a) inférieure ou supérieure de la paroi intermédiaire (27′a) d'un autre segment, à l'emboîtement des segments et des parois intermédiaires, afin que les parois intermédiaires forment une cloison sensiblement étanche délimitant deux canaux annulaires susceptibles d'être parcourus, l'un, délimité entre la paroi intermédiaire (27′) et la paroi externe (16), par un courant descendant de gaz froid, tel que de l'air, et l'autre, délimité entre la paroi intermédiaire (27′) et la paroi interne (10), par un courant ascendant de gaz chaud, la circulation du gaz étant assurée naturellement par thermosiphon ou par ventilation forcée.

10. Segment selon la revendication 9, caractérisé en ce que chaque pontet est subdivisé en deux parties de pontets (46, 47) séparées, dont l'une est une partie de pontet interne (46) fixée à la paroi interne (10) par le volet interne (48) du pontet et à la face interne de la paroi intermédiaire (27′) par une patte extérieure (49) repliée, de préférence du côté opposé au volet interne (48), et dont l'autre est une partie de pontet externe (47) fixée à la paroi externe (16) par le volet externe (50) du pontet et à la face externe de la paroi intermédiaire (27′) par une patte interne (51) repliée, de préférence du côté opposé au volet externe (50), lui-même replié de préférence du côté opposé au volet interne (48).

11. Segment selon l'une des revendications précédentes, caractérisé en ce qu'il présente, dans la partie inférieure de sa paroi externe (16) et au dessus de la zone d'emboîtement inférieure, un moletage périphérique inférieur (22) en saillie vers l'intérieur formant d'une part, une butée (25) limitant l'emboîtement d'un autre segment analogue ou d'un élément de cheminée dans la zone d'emboîtement inférieure dudit segment et, d'autre part, une gorge ouverte radialement vers l'extérieur apte à positionner un collier de fixation (3) de deux segments emboîtés.

12. Segment selon la revendication 11, caractérisé en ce qu'il présente également, dans la partie supérieure de sa paroi externe (16) et au-dessous de la zone d'emboîtement supérieure, un premier moletage périphérique supérieur (21) en saillie vers l'intérieur formant une gorge ouverte radialement vers l'extérieur et apte à positionner un collier de fixation (3) de deux segments emboîtés, et en ce que chaque pontet (11, 29, 42) présente une échancrure (20) traversant son volet externe de sorte qu'il chevauche avec jeu ledit moletage supérieur (21) et que l'échancrure (20) sépare la partie supérieure (120′) de la partie inférieure (120˝) du volet externe.

13. Segment selon la revendication 12, caractérisé en ce qu'un joint d'étanchéité annulaire compressible et thermiquement isolant (6) est disposé à l'intérieur du collier de fixation (3) et destiné à être comprimé par le serrage dudit collier, contre la face externe des parties emboîtées des parois externes (16a, 16b) de deux segments (2a, 2b) emboîtés.

14. Segment selon l'une des revendications 12 et 13, caractérisé en ce qu'il présente, au dessus dudit premier moletage périphérique supérieur (21), un second moletage périphérique supérieur (18) également pratiqué en saillie vers l'intérieur dans la partie supérieure de la paroi externe (16) afin de la rigidifier, et formant une butée haute contre laquelle est appliquée la partie supérieure (120′) du volet externe (120) du pontet (11).

15. Segment selon la revendication 14, caractérisé en ce que ledit second moletage périphérique supérieur (18b) forme une gorge ouverte radialement vers l'extérieur et destinée à loger un joint d'étanchéité annulaire compressible et thermiquement isolant (19b), qui est comprimé dans sa gorge par l'emboîtement de la partie inférieure de la paroi externe (16a) d'un segment supérieur (2a) autour de ladite partie supérieure de la paroi externe (16b) dudit segment (2b).

16. Segment selon l'une des revendications 14 et 15, caractérisé en ce qu'au dessus dudit second moletage périphérique supérieur (18), la partie supérieure de la paroi externe (16) est d'un diamètre réduit par rapport à celui de cette même partie supérieure en dessous dudit second moletage supérieur (18), et en ce que la partie inférieure de la paroi externe (16) est évasée vers l'extérieur par un contre-coudage formant un épaulement (26) pouvant prendre appui contre la face externe du bord inférieur dudit second moletage supérieur (18) d'un autre segment emboîté dans la zone d'emboîtement inférieure dudit segment, de sorte que ledit second moletage supérieur (18) forme une butée accessoire limitant l'emboîtement des segments (2).

17. Segment selon l'une des revendications précédentes, caractérisé en ce que la partie supérieure de volet externe (120) d'au moins un pontet (11, 29, 42) est fixée par au moins une soudure par point (15) à la paroi externe (16).

18. Segment selon l'une quelconque des revendications précédentes, caractérisé en ce qu'au moins un pontet (11, 29, 42) est solidarisé par son volet interne (12) à la paroi interne (10) au moyen d'un seul point d'ancrage.

19. Segment selon l'une quelconque des revendications précédents caractérisé en ce qu'au moins un pontet (11, 29, 42) est solidarisé à la paroi interne (10) par sertissage du bord supérieur de la paroi interne (10) sur la partie supérieure (13) du volet interne (12) qui est roulée vers l'extérieur.

20. Segment selon l'une quelconque des revendications précédentes, caractérisé en ce qu'au moins un pontet (11, 29, 42) est solidarisé à la paroi interne (10) au moyen d'un repli (37) à angle sensiblement droit vers l'extérieur de la partie supérieure de son volet interne (12) en butée contre un repli analogue (38) du bord supérieur de la paroi interne (10) et une soudure par point (40).

21. Segment selon l'une des revendications précédentes, caractérisé en ce que les pontets (42) sont perforés.

22. Segment selon la revendication 21, caractérisé en ce que des perforations (45) dans les pontets sont allongées suivant l'axe du segment (2).

23. Segment selon l'une des revendications précédentes, caractérisé en ce qu'au moins un pontet (11, 29, 42) s'étend radialement au segment (2).

24. Segment selon l'une des revendications précédentes, caractérisé en ce que la dimension axiale du volet externe (120) est supérieure à la dimension axiale du volet interne (12).

## Patentansprüche

1. Vorgefertigtes Segment (2) für einen Rauchkanal (1), das durch Ineinanderschachteln mit einem weiteren Rauchkanalsegment oder Schornsteinelement angeschlossen werden kann und einem Typ angehört, der mindestens zwei Wände, eine innere (10) und eine äußere (16), aufweist, die im wesentlichen koaxiale Zylinder bilden und relativ zueinander durch Positionierungsmittel, welche Abstandshalter umfassen, positioniert sind, die zwischen der inneren Wand und der äußeren Wand Brückenstege (11, 29, 42) bilden,
**dadurch gekennzeichnet**, daß
im oberen Endabschnitt des Segmentes (2) die Positionierungsmittel allein aus mindestens drei Brückenstegen (11, 29, 42) bestehen, von denen einer aus einem Metallteil besteht, das sich im wesentlichen parallel zur Achse des Segmentes (2) erstreckt und dessen radialer innerer und äußerer Endabschnitt jeweils einen inneren (12) und einen äußeren (120) Flügel bildet, der sich im wesentlichen parallel zu der jeweils inneren (10) und äußeren (16) Wand erstreckt, wobei der inneren Flügel (12) des Brückensteges (11, 29, 42) fest mit dem oberen Abschnitt der Außenseite der inneren Wand (10) über eine geringe Oberfläche des oberen Abschnittes des inneren Flügels (12) verbunden ist, dessen unterer Abschnitt relativ zu seinem oberen Abschnitt radial nach außen hin abgekröpft ist, derart, daß ein Abstand zwischen der Außenseite der inneren Wand (10) und dem unteren Abschnitt der inneren Flügels (12) des Brückensteges (11, 29, 42) gebildet ist, wobei der äußere Flügel des Brückensteges mit seinem oberen Abschnitt (120′) an der Innenseite der äußeren Wand (16), in einem bestimmten Abstand unter dem oberen Ende (17) der Innenseite der äußeren Wand (16), befestig ist, und der untere Abschnitt (120˝) des äußeren Flügels des Brückensteges (11, 29, 42) ein Stützbein bildet, das sich auf der Innenseite der äußeren Wand (16), unterhalb der Verschachtelungszone des oberen Endabschnittes des Segmentes (2), abstützt.

2. Segment nach Anspruch 1, dadurch gekennzeichnet, daß es eine Zwischenwand (27) umfaßt, die einen im wesentlichen koaxial zur Innenwand (10) und zur Außenwand (16) veraufenden Zylinder bildet.

3. Segment nach Anspruch 1 oder 2, dadurch gekennzeichnet, daß zwischen mindestens zwei Wänden ein wärmeisolierendes Material (28, 43) vorgesehen ist.

4. Segment nach Anspruch 3, wenn rückbezogen auf Anspruch 2, dadurch gekennzeichnet, daß zwischen der äußeren Wand (16) und der Zwischenwand (27) ein wärmeisolierendes Material (28) vorgesehen ist.

5. Segment nach einem beliebigen Anspruch 2 bis 4, dadurch gekennzeichnet, daß die Zwischenwand (27) mindestens eine versteifende Walzprägung (31, 32) aufweist, die nach außen hin oder nach innen vorspringt.

6. Segment nach einem beliebigen Anspruch 2 bis 5, dadurch gekennzeichnet, daß die Zwischenwand (27) Durchtrittsöffnungen (30) für die Brückenstege (11, 29, 42) aufweist.

7. Segment nach Anspruch 6, dadurch gekennzeichnet, daß mindestens ein Brückensteg (29) mindestens eine Ausbrechung (41) aufweist, die eine Befestigungszunge zur Zwischenwand (27) bildet und an letztere angeschweißt werden kann.

8. Segment nach einem der Ansprüche 2 bis 7, dadurch gekennzeichnet, daß mindestens einer der unteren und oberen Ränder mindestens eines Brückensteges (29) ein V (36) bildet, dessen Boden die Zwischenwand (27) in radialer Richtung positioniert.

9. Segment nach Anspruch 2, dadurch gekennzeichnet, daß mindestens einer der oberen und unteren Endabschnitte der Zwischenwand (27′b) mindestens eine periphere, radial vorspringende Walzprägung (53b) aufweist, die eine Ringkehle begrenzt, welche eine komprimierbare und wärmeisolierende Dichtung (52b) aufnimmt, die beim Verschachteln der Segmente und der Zwischenwände durch einen unteren oder oberen Endabschnitt (34′a) der Zwischenwand (27′a) eines anderen Segmentes angepreßt wird, damit die Zwischenwände eine im wesentlichen dichte Umschließung bilden, die zwei ringförmige Kanäle solcher Art begrenzt, von denen der eine, durch die Zwischenwand (27′) und die Außenwand (16) umgrenzt, von einer absteigenden Strömung heißen Gases, wie etwa Luft, und der andere, durch die Zwischenwand (27′) und die innere Wand (10) umgrenzt, von einer aufsteigenden Strömung heißen Gases durchquert werden kann, wobei die Zirkulation des Gases auf natürliche Weise durch Thermosyphonwirkung oder durch Zwangsbelüftung bewirkt wird.

10. Segment nach Anspruch 9, dadurch gekennzeichnet, daß jeder Brückensteg in zwei getrennte Stegabschnitte (46, 47) unterteilt ist, von denen der eine Abschnitt ein innerer Stagabschnitt (46) ist, der an der inneren Wand (10) durch den inneren Flügel (48) des Brückensteges, und an der Innenseite der Zwischenwand (27′) durch eine umgefaltete äußere Klaue (49) befestigt ist, vorzugsweise an dem dem inneren Flügel (48) entgegengesetzten Ende, und von denen der andere Abschnitt ein äußerer Stegabschnitt (47) ist, der an der äußeren Wand (16) durch den äußeren Flügel (50) des Brückensteges, und an der Außenseite der Zwischenwand (27′) durch eine umgefaltete inneren Klaue (51) befestigt ist, vorzugsweise an dem dem äußeren Flügel (50) entgegengesetzten Ende, das seinerseits vorzugsweise an dem dem inneren Flügel (48) entgegengesetzten Ende umgefaltet ist.

11. Segment nach einem vorhergehenden Anspruch, dadurch gekennzeichnet, daß er im unteren Abschnitt seiner äußeren Wand (16), über der unteren Verschachtelungszone, eine untere periphere, nach innen vorspringen den Walzprägung (22) aufweist, die einerseits einen Anschlag (25) zur Begrenzung der Verschachtelungstiefe eines analogen Segmentes oder eines Schornsteinelementes in der unteren Verschachtelungszone des genannten Segmentes, und andererseits eine radial nach außen hin offene Kehle aufweist, die zur Positionierung einer Befestigungsschelle (3) für die verschachtelten beiden Segmente dient.

12. Segmente nach Anspruch 11, dadurch gekennzeichnet, daß es im oberen Abschnitt seiner äußeren Wand (16), unter der oberen Verschachtelungszone, eine erste obere, nach außen hin vorspringende, periphere Walzprägung (21) aufweist, die zur Positionierung einer Befestigungsschelle (3) für die beiden verschachtelten Segmente dient; daß jeder Brückensteg (11, 29, 42) einen bogenförmigen Ausschnitt (20) aufweist, der seinen äußeren Flügel in der Weise überquert, daß er die obere Walzprägung (21) mit Spiel überbrückt; und daß der bogenförmige Ausschnitt (20) den oberen Abschnitt (120′) vom unteren Abschnitt (120˝) des äußeren Flügels trennt.

13. Segment nach Anspruch 12, dadurch gekennzeichnet, daß im Inneren der Befestigungsschelle (3) einen komprimierbare und wärmeisolierende ringförmige Dichtung (6) angeordnet ist, die durch das Festpannen der Schelle gegen die Außenseite der verschachtelten Abschnitte der Außenwände (16a, 16b) der beiden verschachtelten Segmente (2a, 2b) angedrückt wird.

14. Segment nach Anspruch 12 oder 13, dadurch gekennzeichnet, daß es über der ersten oberen, peripheren Walzprägung (21) eine zweite obere, periphere Walzprägung (18) aufweist, die ebenfalls im oberen Abschnitt der äußeren Wand (16) nach innen hin vorspringend angebracht ist, um die genannte Wand zu versteifen und einen oberen Anschlag zu bilden, auf den sich der obere Abschnitt (120′) des äußeren Flügels (120) des Brückensteges (11) abstützt.

15. Segment nach Anspruch 14, dadurch gekennzeichnet, daß die zweite obere periphere Walzprägung (18) eine radial nach außen hin offene Kehle bildet, die zur Aufnahme einer komprimierbaren und wärmeisolierenden, ringförmigen Dichtung (19b) bestimmt ist, welche bei der Verschachtelung des unteren Abschnittes der äußeren Wand (16a) eines oberen Segmentes (2a) um den oberen Abschnitt der äußeren Wand (16b) des Segmentes (2b) herum in ihre Kehle gepreßt wird.

16. Segment nach Anspruch 14 oder 15, dadurch gekennzeichnet, daß oberhalb der zweiten oberen, peripheren Walzeinprägung (18) der obere Abschnitt der äußeren Wand (16) einen Durchmesser aufweist, der relativ zum Durchmesser des gleichen, oberen Abschnittes unterhalb der zweiten oberen Walzprägung (18) reduziert ist, und daß der untere Abschnitt der äußeren Wand (16) nach außen hin durch eine Abkröpfung trichterförmig erweitert ist, die eine Schulter (26) bildet, welche sich gegen die Außenseite des unteren Randes der zweiten, oberen Walzprägung (18) eines anderen Segmentes abstützt, das in der unteren Verschachtelungszone des Segmentes gefaßt ist, derart, daß die zweite obere Walzprägung (18) einen Hilfsanschlag bildet, der die Verschachtelung der Segmente (2) begrenzt.

17. Segment nach eine der vorhergehenden Ansprüche, dadurch gekennzeichnet, daß der obere Abschnitt des äußeren Flügels (120) mindestens eines Brückensteges (11, 29, 42) durch mindestens eine Punktschweißung (15) an der äußeren Wand (16) befestig ist.

18. Segment nach einem beliebigen vorhergehenden Anspruch, dadurch gekennzeichnet, daß mindestens ein Brückensteg (11, 29, 42) durch seinen inneren Flügel (12) an der inneren Wand (10) durch einen einzigen Verankerungspunkt befestig ist.

19. Segment nach einem beliebigen vorhergehenden Anspruch, dadurch gekennzeichnet, daß mindestens ein Brückensteg (11, 29, 42) and der inneren Wand (10) durch Umbördeln des oberen Randes der inneren Wand (10) auf den oberen Abschnitt (13) des inneren Flügels (12) befestigt ist, der nach außen hin eingerollt ist.

20. Segment nach einem beliebigen vorhergehenden Anspruch, dadurch gekennzeichnet, daß mindestens ein Brückensteg (11, 29, 42) mittels einer Falte (37), die unter einem im wesentlichen rechten Winkel zur Außenseite des oberen Abschnittes seines inneren Flügels (12) gerichtet ist und in Anschlag mit einer analogen Falte (38) des oberen Randes der inneren Wand steht, an der inneren Wand (10) fixiert und ebenso mit einer Punktschweißung (40) befestigt ist.

21. Segment nach einem der vorhergehenden Ansprüche, dadurch gekennzeichnet, daß die Brückenstege (42) perforiert sind.

22. Segment nach Anspruch 21, dadurch gekennzeichnet, daß die Perforationen (25) in den Brückenstegen in Richtung der Achse des Segmentes (2) länglich ausgebildet sind.

23. Segment nach einem vorhergehenden Anspruch, dadurch gekennzeichnet, daß sich mindestens ein Brückensteg (11, 29, 42) in radialer Richtung zum Segment (2) erstreckt.

24. Segment nach einem vorhergehenden Anspruch, dadurch gekennzeichnet, daß der axiale Durchmesser des äußeren Flügels (120) größer als der axiale Durchmesser des inneren Flügels (12) ist.

## Claims

1. A segment (2) for a prefabricated flue (1), for interlocking assembly with another flue segment or chimney element and being of the type comprising at least two walls, one of which is an inner wall (10) and the other an outer wall (16), defining substantially coaxial cylinders and being positioned in relation to each other by positioning means comprising spacers which constitute bridging elements (11, 29, 42) between the inner and outer walls, characterised in that in the upper terminal portion of the segment (2), the said positioning means consist only of at least three bridging elements (11, 29, 42), each of which comprises a metallic member extending substantially parallel to the axis of the segment (2), with their inner and outer radial terminal portions defining respectively an inner flange (12) and an outer flange (120) extending substantially parallel to the respective inner wall (10) and outer wall (16), the inner flange (12) of the said bridging element (11, 29, 42) being fixed to the upper portion of the outer face of the said inner wall (10) through a small surface area of the upper portion of the said inner flange (12), the lower portion of which is belled radially outwards with respect to its upper portion so as to define a gap between the outer face of the said inner wall (10) and the said lower portion of the said inner flange (12) of the bridging element (11, 29, 42), and the outer flange of the said bridging element being fixed by means of its upper portion (120′) to the inner face of the said outer wall (16) at a particular distance below the upper end (17) of the said inner face of the said outer wall (16), with the lower portion (120˝) of the said outer flange of the bridging element (11, 29, 42) constituting a stay element in engagement against the inner face of the said outer wall (16) below the interlocking zone of the upper terminal portion of the segment (2).

2. A segment according to Claim 1, characterised in that it includes an intermediate wall (27) defining a cylinder substantially coaxial with the inner wall (10) and the outer wall (16).

3. A segment according to Claim 1 or Claim 2,
characterised in that a thermal insulating material (28, 43) is arranged between at least two walls.

4. A segment according to Claim 3 when dependent on Claim 2, characterised in that a thermal insulating material (28) is arranged between the outer wall (16) and the intermediate wall (27).

5. A segment according to any one of Claims 2 to 4,
characterised in that the intermediate wall (27) is formed with at least one stiffening bead (31, 32) projecting outwardly or inwardly.

6. A segment according to one of Claims 2 to 5,
characterised in that the intermediate wall (27) is formed with apertures (30) through which the bridging elements (11, 29, 42) pass.

7. A segment according to Claim 6, characterised in that at least one bridging element (29) has at least one pressed-out portion (41), defining a tongue for securing against the intermediate wall (27) and arranged to be welded to the latter.

8. A segment according to one of Claims 2 to 7,
characterised in that at least one of the lower and upper edges of at least one bridging element (29) is formed with a V (36) the base of which positions the intermediate wall (27) radially.

9. A segment according to Claim 2, characterised in that at least one of the upper and lower terminal portions of the intermediate wall (27′b) is formed with at least one peripheral bead (53b) projecting radially and defining an annular groove containing a compressible and thermally insulating sealing member (52b), which is adapted to be compressed by a lower or upper terminal portion (34′a) of the intermediate wall (27′a) of another segment, for the interlocking of the segments and of the intermediate walls, so that the intermediate walls define a substantially sealed baffle, which delimits two annular ducts adapted for flow of a downward stream of cold gas such as air through one said duct, defined between the intermediate wall (27′) and the outer wall (16), and for flow of an upward stream of hot gas through the other said duct defined between the intermediate wall (27′) and the inner wall (10), the circulation of the gas being obtained naturally by thermal syphon effect or by forced ventilation.

10. A segment according to Claim 9, characterised in that each bridging element is sub-divided into two separate bridge pieces (46, 47), one of which is an inner bridge piece (46) fixed to the inner wall (10) by means of the inner flange (48) of the bridging element, and to the inner face of the intermediate wall (27′) by means of an outer lug (49) which is bent back, preferably on the opposite side from the inner flange (48), the other bridge piece being an outer bridge piece (47) fixed to the outer wall (16) by means of the outer flange (50) of the bridging element and to the outer face of the intermediate wall (27′) by means of an inner lug (51) which is bent back, preferably on the opposite side from the outer flange (50), the latter being preferably bent back on the opposite side from the inner flange (48).

11. A segment according to one of the preceding Claims, characterised in that it has, in the lower portion of its outer wall (16) and above the lower interlocking zone, a lower peripheral bead (22) projecting inwardly and defining, firstly a stop surface (25) limiting the interlocking of another similar segment or of a chimney element into the lower interlocking zone of the said segment, and secondly a groove which is open radially outwardly and which is adapted to locate a collar (3) for securing two interlocked segments together.

12. A segment according to Claim 11, further characterised in that it has, in the upper portion of its outer wall (16) and below the upper interlocking zone, a first upper peripheral bead (21), which projects inwardly and defines a groove open radially outwardly, and which is adapted to locate a collar (3) for securing two interlocked segments together, and in that each bridging element (11, 29, 42) is formed with a slot (20) traversing its outer flange in such a way as to span the said upper bead (21) with a clearance, and such that the slot (20) separates the upper portion (120′) of the outer flange from its lower portion (120˝).

13. A segment according to Claim 12, characterised in that an annular, compressible and thermally insulating sealing member (6) is disposed within the securing collar (3), being adapted to be compressed by the gripping of the said collar against the outer face of the interlocked portions of the outer walls (16a, 16b) of two interlocked segments (2a, 2b).

14. A segment according to Claim 12 or Claim 13,
characterised in that it has, above the said first upper peripheral bead (21), a second upper peripheral bead (18) which is likewise so formed in the upper portion of the outer wall (16) as to project inwardly, so as to rigidify the latter and to define an upper abutment, against which the upper portion (120′) of the outer flange (120) of the bridging element (11) is engaged.

15. A segment according to Claim 14, characterised in that the said second upper peripheral bead (18b) defines a groove which is open radially outwardly and which is adapted to contain an annular, compressible and thermally insulating sealing member (19b), which is compressed in its groove by the interlocking engagement of the lower portion of the outer wall (16a) of an upper segment (2a) about the said upper portion of the outer wall (16b) of the said segment (2b).

16. A segment according to Claim 14 or Claim 15,
characterised in that above the said second upper peripheral bead (18), the upper portion of the outer wall (16) is of a diameter which is reduced with respect to that of the same upper portion below the said second upper bead (18), and in that the lower portion of the outer wall (16) is belled outwardly in a countersink, which defines a shoulder (26) that is able to engage against the outer face of the lower edge of the said second upper bead (18) of another segment interlocked in the lower interlocking zone of the said segment, so that the said second upper bead (18) constitutes an auxiliary abutment limiting the interlocking of the segments (2).

17. A segment according to one of the preceding Claims, characterised in that the upper portion of the outer flange (120) of at least one bridging element (11, 29, 42) is fastened to the outer wall (16) by at least one spot weld (15).

18. A segment according to any one of the preceding Claims, characterised in that at least one bridging element (11, 29, 42) is secured by means of its inner flange (12) to the inner wall (10) by means of a single anchoring point.

19. A segment according to any one of the preceding Claims, characterised in that at least one bridging element (11, 29, 42) is secured to the inner wall (10) by deformation of the upper edge of the inner wall (10) over the upper portion (13) of the inner flange (12), which is curled outwardly.

20. A segment according to any one of the preceding Claims, characterised in that at least one bridging element (11, 29, 42) is secured to the inner wall (10) by means of a portion (37) bent at substantially a right angle outwardly from the upper portion of its inner flange (12) and in abutment against a similar bent-out portion (38) of the upper edge of the inner wall (10), and by means of a spot weld (40).

21. A segment according to one of the preceding Claims, characterised in that the bridging elements (42) are prefabricated.

22. A segment according to Claim 21, characterised in that perforations (45) in the bridging elements are elongated along the axis of the segment (2).

23. A segment according to one of the preceding Claims, characterised in that at least one bridging element (11, 29, 42) extends radially of the segment (2).

24. A segment according to one of the preceding Claims, characterised in that the axial dimension of the outer flange (120) is greater than the axial dimension of the inner flange (12).
